Europäisches Patentamt

European Patent Office

Office européen des brevets

(19)

(11) **EP 0 587 905 B1**

(12) **EUROPEAN PATENT SPECIFICATION**

(45) Date of publication and mention
of the grant of the patent:
**03.09.1997 Bulletin 1997/36**

(21) Application number: **93906839.1**

(22) Date of filing: **29.03.1993**

(51) Int Cl.⁶: **G11B 21/10**

(86) International application number:
**PCT/JP93/00380**

(87) International publication number:
**WO 93/20557 (14.10.1993 Gazette 1993/25)**

(54) **DATA RECORDING MEDIUM AND DATA RECORDING APPARATUS**

DATENAUFZEICHNUNGSMEDIUM UND DATENSPEICHERGERÄT

SUPPPORT D'ENREGISTREMENT DE DONNEES ET APPAREIL D'ENREGISTREMENT DE
DONNEES

(84) Designated Contracting States:
**DE FR GB**

(30) Priority: **31.03.1992 JP 76744/92**
**15.12.1992 JP 334316/92**

(43) Date of publication of application:
**23.03.1994 Bulletin 1994/12**

(73) Proprietor: **Mitsubishi Chemical Corporation
Chiyoda-ku Tokyo (JP)**

(72) Inventor: **SEO, Yuzo
Kamakura-shi, Kanagawa 248 (JP)**

(74) Representative: **VOSSIUS & PARTNER
Siebertstrasse 4
81675 München (DE)**

(56) References cited:
**EP-A- 0 176 185          WO-A-85/02933
WO-A-91/20077          WO-A-93/15505
GB-A- 2 110 843          GB-A- 2 200 227
JP-A- 3 280 275          JP-A-52 080 815
JP-A-63 173 280**

## Description

<u>Technical Field</u>

The present invention relates to a data recording medium and a data recording apparatus for performing tracking by using continuous servo signals, and particularly to a data recording medium and a data recording apparatus suitable for use when an optical means is used to perform tracking.

<u>Background Art</u>

A number of floppy disk systems are being used for recording data in computers and word processors. As an ordinary floppy disk system is so arranged that a head is positioned under open loop control (control without feedback) using a step motor, there have been problems of poor positioning accuracy and inability to increase track density.

Recently, it has been proposed to find the position of a head by providing grooves to a magnetic recording medium and reading the groove position by an optical sensor as an integral part of the head. This method performs positioning the head under closed loop control (feedback control) so that positioning accuracy is made improvable, thus making it feasible to increase the track density by one order of magnitude as compared with the conventional device.

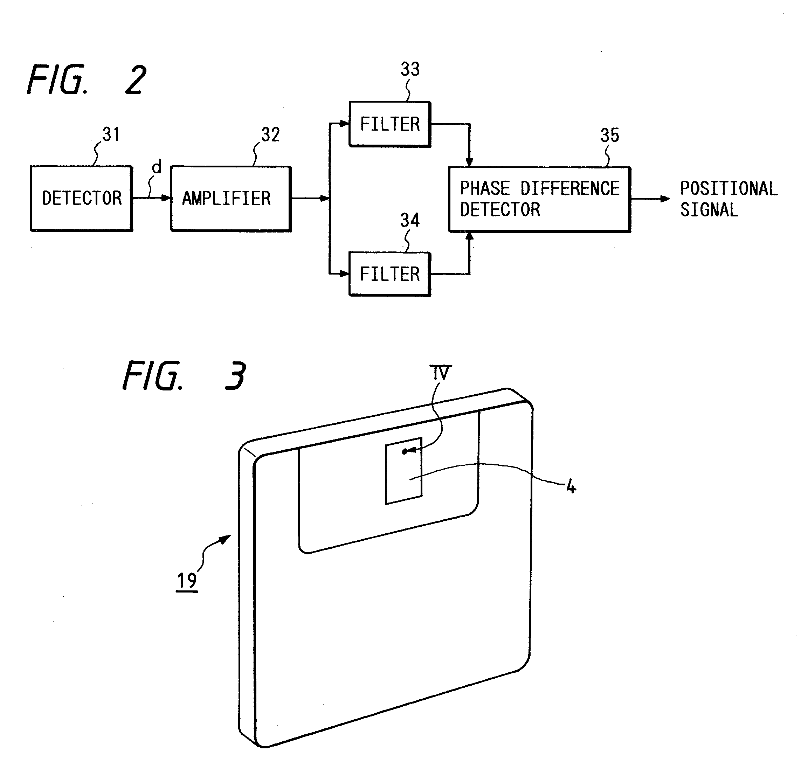

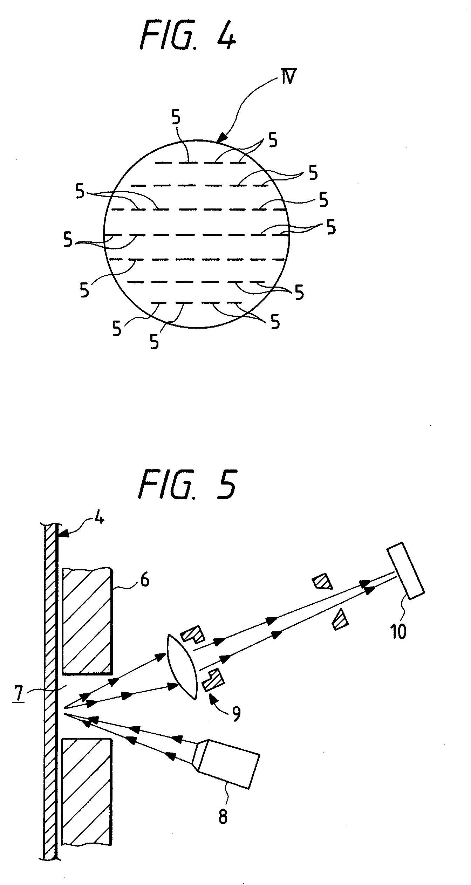

Figs. 3-4 show an exemplary application of this principle to a floppy disk 19. Fig. 4 is an enlarged view of a portion IV of Fig. 3. Fig. 5 is a sectional view perpendicular to the surface of a medium showing a servo signal read system in an optical track servo mechanism. There are provided many pits 5 in the surface of a medium 4 in accordance with a track pitch. Light is projected from a light emitting element 8 through a hole 7 in the center of a head 6 onto the surface of the medium 4. A light receiving element 10 reads the light reflected from the medium 4 through an optical system 9 to perform tracking.

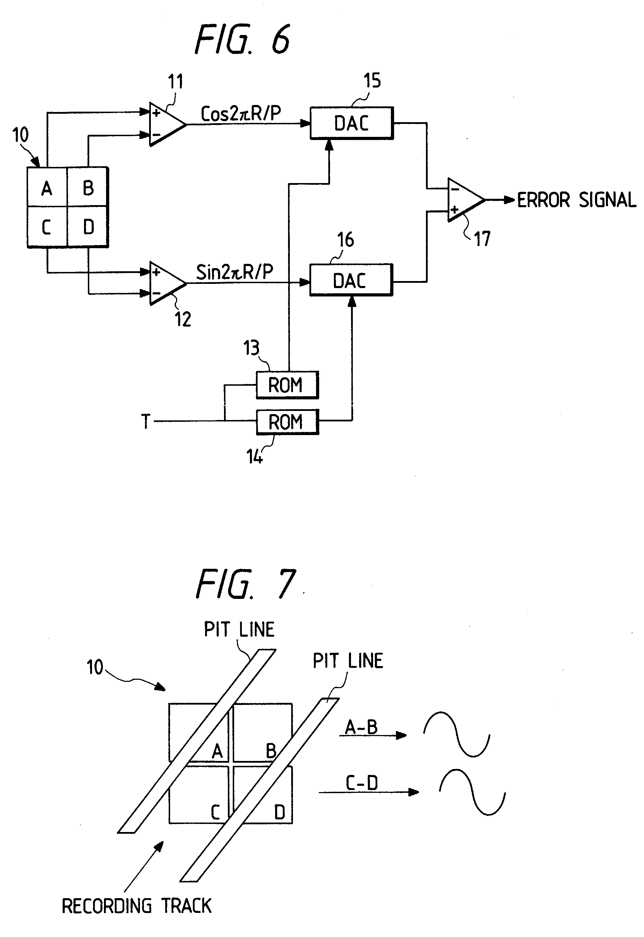

Figs. 6 and 7 show a tracking error detection circuit and an optical detector. Reference character P in the following denotes a track pitch.

The light receiving element 10 comprises four unit elements arranged in the form of a square grid and outputs four signals A-D on receiving the reflected light. When the head is located at a track position (radius R), a differential amplifier 11 subtracts the signal B from the signal A, whereby a signal proportional to $\cos(2\pi R/P)$ is obtained. Moreover, a differential amplifier 12 subtracts the signal D from the signal C, whereby a signal proportional to $\sin(2\pi R/P)$ is obtained. On the other hand, binary codes indicating $\sin(2\pi T/P)$ and $\cos(2\pi T/P)$ are formed by supplying a binary code of a target value T to ROMs 13 and 14 with sin and cos tables written thereto. The binary codes are then converted to analog signals by multiplication type DA converters 15 and 16, which are multiplied by the signals $\sin(2\pi R/P)$ and $\cos(2\pi R/P)$ obtained from the optical detector, and subtraction is carried out by a differential amplifier 17, so that an error signal is obtained by carrying out the operations shown by the following equations.

$$\cos(2\pi T/P)\sin(2\pi R/P) - \sin(2\pi T/P)\cos(2\pi R/P)$$

$$= \sin((2\pi R/P) - (2\pi T/P))$$

$$\fallingdotseq 2\pi(R - T) / P$$

Highly precise tracking with an error close to 0 is performed by feeding back the result of calculation to a tracking system.

A tracking servomechanism of the sort as stated above necessitates two sets of detectors and therefore the problem is that not only the size but also the manufacturing costs of the apparatus is rendered greater.

<u>Disclosure of Invention</u>

A disk-like data recording medium of the present invention having coaxial tracks on which continuous servo signals to be optically read are recorded, is characterized in that the servo signal includes a signal resulting from superimposing two kinds of signals which are different in wavelength and that the two kinds of signals each are uniform with the phase difference therebetween sequentially differing on a track basis.

The data recording medium of the present invention may be made a magnetic recording medium.

A system of the present invention comprising a data recording apparatus and a dish-like recording medium is defined in claim 3.

The data recording apparatus in the system of the present invention may be arranged so that the two kinds of signals different in wavelength are recorded in respective positions different from each other and that a signal resulting from superimposing the two kinds of uniform signals different in wavelength is obtained by reading the two kinds of signals different in wavelength by means of one single detector.

The present invention is characterized in that a signal resulting from superimposing two uniform signals different in wavelength is used as a servo signal and that the phase difference between the signals sequentially differs on a track basis. Tracking is performed by separating the servo signal thus read out into frequency components corresponding to the two wavelengths and detecting the phase difference between the two frequency components.

It is preferred to optically detect the servo signal on the medium by providing a portion in which a reflection factor or transmittivity locally differs. The signal having the two signals different in wavelength and superimposed on each other may be recorded on one servo track, or the signal having the two uniform signals different in wavelength and superimposed on each other may be obtained from one single detector through recording the two signals different in wavelength at positions spatially different from but close to each other.

Since pairs of signals different in phase difference for each track are recorded on the data recording medium according to the present invention, any track position is made detectable by measuring the phase difference. Since the two signals are different in frequency, moreover, they may be separated from each other by a filter or the like.

In a case where the detector extends over two tracks and responds to two servo signals, the detected signal is a composite signal of both and the phase difference between the signals obtained via the separator means such as a filter shows an intermediate value between the signals obtained from the respective tracks. More specifically, the detector outputs the servo signals from two tracks at a ratio corresponding to the track positions. When signals different in phase are mixed, there is shown an intermediate phase corresponding to the mixture ratio. Therefore, the position of a head can be obtained by detecting the phase relationship.

Brief Description of Drawings

Fig. 1 is an exemplary diagram of a condition wherein a servo signal pattern on a data recording medium is read by a detector.

Fig. 2 is a block diagram of a servo signal detector.

Fig. 3 is a perspective view of a floppy disk.

Fig. 4 is an exemplary enlarged view of a portion IV of the surface of the disk of Fig. 3.

Fig. 5 is a sectional view of a servo signal read system in a conventional optical track servomechanism.

Fig. 6 is a block diagram of a detection circuit in the conventional optical track servomechanism.

Fig. 7 is a diagram illustrating the relation between a detector and a medium in the conventional optical track servomechanism.

Best Mode for Carrying Out the Invention

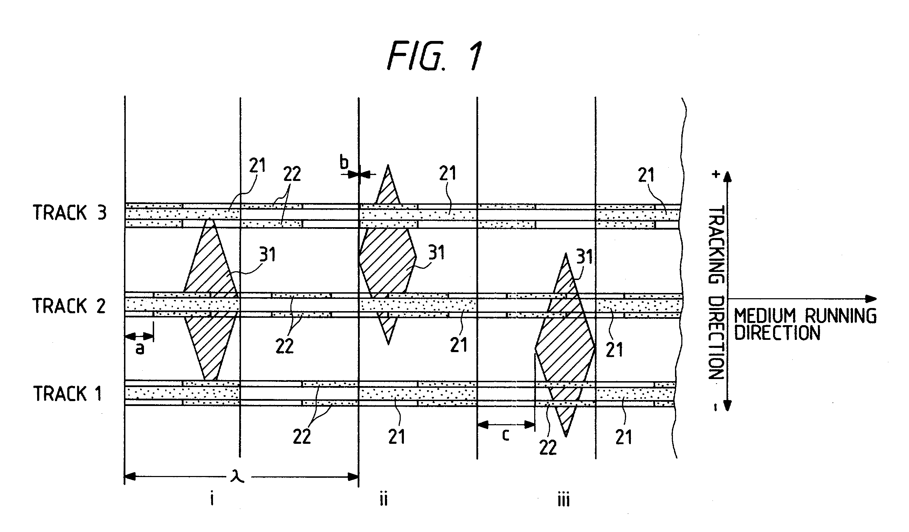

Fig. 1 shows an exemplary data recording medium embodying the present invention, wherein a long wavelength signal 21 and a short wavelength signal 22 are read by a detector 31. A medium like this can be manufactured by effecting laser irradiation at prescribed positions on the surface of a magnetic recording medium such as a floppy disk.

As shown in Fig. 1 by way of example, the signals 21 and 22 are recorded at positions different from but close to each other on the surface of the medium. The signals thus closely recorded are mixed together at the time of reproduction and a combination of both is output from the detector. A similar output may be obtained by adding trigonometric functions corresponding to the two signals and making the result correspond to the intensity or the width of optical recording or otherwise converting the result by PWM (Pulse Width Modulation) to a binary signal for recording purposes.

In Fig. 1, the signal 22 has half the wavelength ($\lambda$) of the signal 21 and in recorded in such a way that its phase sequentially differs on a track basis with respect to the signal 21. In Fig. 1, the phase phase difference between the signals 21 and 22 is set sequentially different, for example, at 0 on the track 3 as shown by b, $\lambda/8$ on the track 2 as shown by a and $\lambda/4$ on the track 1 as shown by c.

Although the phase difference between the signals 21 and 22 is caused to sequentially differ on a track basis by making equal the phases of signals 21 track to track while sequentially changing those of the signals 22 for respective tracks, the sequential change of the phase difference may be accomplished by changing both the phases of the signals 21 and 22 sequentially at a different ratio from each other for each track.

In Fig. 1, i refers to a case where the detector 31 is located right above the track 2 and a signal d which the detector 31 outputs in this case corresponds to the signal on the track 2. When the detector moves upward and reaches a position ii, the signal d from the detector is mixed with a signal on the track 3 and the phase of the short wavelength component then advances. When the detector 31 conversely moves downward and reaches a position iii, the signal d from the detector is mixed with a signal on the track 1 and the phase of the short wavelength component then lags. The position of the detector is thus detected as the phase difference. Since the phase difference between the short wavelength components is thus detected, tracking is accurately performed by moving a head so that the detected phase difference is held within a predetermined range.

The signal that the detector outputs is processed in a circuit shown in Fig. 2. First, the detected signal d from the detector 31 is amplified by an amplifier 32 up to a prescribed level and then the amplified signal is separated into two signals by band-pass filters 33 and 34 for passing only respective wavelength components therethrough. A signal indicating a track position is subsequently obtained by measuring the phase difference between both the signals by a phase detector 35.

Various known mechanisms may be employed as a servomechanism for performing tracking by making use of a phase difference. A servo circuit generally known as a PLL (Phase Locked Loop) is nothing but a circuit which uses a phase difference as a signal source, and capable of accurately performing tracking by controlling a head position under PLL control so that the phases of the following signals may conform to each other, the signals being obtained by subjecting the short and long wavelength components of the two signals to four and eight times frequency multiplication in a frequency multiplier, respectively. When a digital signal processor is used to constitute a servomechanism, it is used to read the rise time of the two signals and to compute the difference therebetween. A tracking error is thus simply obtainable.

Industrial Applicability

As set forth above, the data recording medium and the data recording apparatus according to the present invention are capable of accurately detecting the head position by means of one single detector and this greatly contributes to reducing not only the size but also manufacturing costs of the apparatus; therefore, these are suitable for use as large capacity data recording medium and apparatus.

**Claims**

1.  A disk-like data recording medium having coaxial tracks on which a continuous servo signal to be optically read is recorded, characterized in that the servo signal comprises a signal resulting from superimposing two kinds of signals different in wavelength and that the two kinds of signals each are uniform while a phase difference therebetween sequentially differs on a track basis.

2.  A data recording medium as claimed in claim 1, wherein the data recording medium is a magnetic recording medium.

3.  A system comprising a data recording apparatus for performing a tracking servo function by reading a continuous servo signal from a disk-like data recording medium and making use of a positional signal detected from the servo signal, the data recording apparatus comprising:
    means for optically reading the servo signal from the data recording medium having coaxial tracks on which the continuous servo signal to be optically read is recorded,
    characterised in that

    the servo signal comprises a signal resulting from superimposing two kinds of signals different in wavelength and wherein the two kinds of signals each are uniform while a phase difference therebetween sequentially differs on a track basis;
    the apparatus further comprising means for separating the servo signal read from the data recording medium into two frequency components corresponding to the two wavelengths of the two kinds of signals; and
    means for outputting a positional signal from a phase difference between the two frequency components.

4.  A system as claimed in claim 3, wherein the two kinds of signals different in wavelength are recorded on the data recording medium in respective positions different from each other and wherein a signal resulting from superimposing the two kinds of uniform signals different in wavelength is obtained by reading the two kinds of signals different in wavelength by means of one single detector.

**Patentansprüche**

1.  Scheibenartiges Datenaufzeichnungsmedium mit gleichachsigen Spuren, auf denen ein optisch zu lesendes, kontinuierliches Servosignal aufgezeichnet ist, dadurch gekennzeichnet, daß das Servosignal ein Signal als Ergebnis einer Überlagerung von zwei Arten von Signalen mit unterschiedlicher Wellenlänge aufweist, und daß die beiden Arten von Signalen jeweils gleichförmig sind, während sich eine Phasendifferenz zwischen ihnen fortlaufend spurweise unterscheidet.

2.  Datenaufzeichnungsmedium nach Anspruch 1, wobei das Datenaufzeichnungsmedium ein magnetisches Aufzeichnungsmedium ist.

3.  System mit einer Datenaufzeichnungsvorrichtung zum Durchführen einer Nachführservofunktion durch Lesen eines kontinuierlichen Servosignals von einem scheibenartigen Datenaufzeichnungsmedium und Verwenden eines anhand des Servosignals detektierten Positionssignals, wobei die Datenaufzeichnungsvorrichtung aufweist:
    eine Einrichtung zum optischen Lesen des Servosignals von dem Datenaufzeichnungsmedium mit gleichachsigen Spuren, auf denen das optisch zu lesende kontinuierliche Servosignal aufgezeichnet ist,
    dadurch gekennzeichnet, daß

    das Servosignal ein Signal als Ergebnis einer Überlagerung von zwei Arten von Signalen mit unterschiedlicher Wellenlänge aufweist, und daß die beiden Arten von Signalen jeweils gleichförmig sind, während sich die Phasendifferenz zwischen ihnen fortlaufend spurweise unterscheidet;
    wobei die Vorrichtung ferner aufweist: eine Einrichtung zum Trennen des von dem Datenaufzeichnungsmedium gelesenen Servosignals in zwei Frequenzkomponenten, die den beiden Wellenlängen der beiden Arten von Signalen entsprechen; und
    eine Einrichtung zum Ausgeben eines Positionssignals anhand einer Phasendifferenz zwischen den beiden Frequenzkomponenten.

**4.** System nach Anspruch 3, wobei die beiden Arten von Signalen mit unterschiedlicher Wellenlänge auf dem Datenaufzeichnungsmedium an jeweiligen Positionen aufgezeichnet sind, die sich voneinander unterscheiden, und wobei ein Signal als Ergebnis einer Überlagerung der beiden Arten von gleichförmigen Signalen mit unterschiedlicher Wellenlänge durch Lesen der beiden Arten von Signalen mit unterschiedlicher Wellenlänge mittels eines einzelnen Detektors erhalten wird.

**Revendications**

**1.** Support d'enregistrement de données en forme de disque ayant des pistes coaxiales sur lesquelles un signal d'asservissement continu à lire optiquement est enregistré, caractérisé en ce que le signal d'asservissement comprend un signal résultant de la superposition de deux types de signaux qui diffèrent en longueur d'ondes et en ce que les deux types de signaux sont chacun uniformes alors que la différence de phase entre eux diffère séquentiellement sur une base de piste.

**2.** Support d'enregistrement de données selon la revendication 1, dans lequel le support d'enregistrement de données est un support d'enregistrement magnétique.

**3.** Système comprenant un appareil d'enregistrement de données pour réaliser une fonction d'asservissement de suivi de piste en lisant un signal d'asservissement continu à partir d'un support d'enregistrement de données en forme de disque et en utilisant un signal positionnel détecté à partir du signal d'asservissement, l'appareil d'enregistrement de données comprenant :

un moyen pour lire optiquement le signal d'asservissement du support d'enregistrement de données ayant des pistes coaxiales sur lesquelles le signal d'asservissement continu à lire optiquement est enregistré,

caractérisé en ce que :

le signal d'asservissement comprend un signal résultant de la superposition de deux types de signaux qui diffèrent en longueur d'ondes et dans lequel les deux types de signaux sont chacun uniformes alors que la différence de phase entre eux diffère séquentiellement sur une base de piste ;
l'appareil comprenant en outre un moyen pour séparer le signal d'asservissement lu à partir du support d'enregistrement de données en deux composantes de fréquence correspondant aux deux longueurs d'ondes des deux types de signaux ; et

un moyen pour fournir un signal positionnel à partir d'une différence de phase entre les deux composantes de fréquence.

**4.** Système selon la revendication 3, dans lequel les deux types de signaux qui diffèrent en longueur d'ondes sont enregistrés sur le support d'enregistrement de données dans des positions respectives différentes l'une de l'autre et où un signal résultant de la superposition de deux types de signaux uniformes qui diffèrent en longueur d'ondes est obtenu en lisant les deux types de signaux qui diffèrent en longueur d'ondes au moyen d'un détecteur unique.

FIG. 1

EP 0 587 905 B1

## FIG. 2

```
                                    ┌──────────┐
                                    │  FILTER  │ ← 33
                                ┌──→│          │───┐
                                │   └──────────┘   ↓
┌──────────┐  d  ┌───────────┐  │              ┌──────────────────┐
│ DETECTOR │────→│ AMPLIFIER │──┤              │ PHASE DIFFERENCE  │──→ POSITIONAL
│          │     │           │  │              │ DETECTOR          │    SIGNAL
└──────────┘     └───────────┘  │              └──────────────────┘
   ↑31              ↑32          │   ┌──────────┐   ↑  ↑35
                                └──→│  FILTER  │───┘
                                    │          │ ← 34
                                    └──────────┘
```

## FIG. 3

# FIG. 4

# FIG. 5

## FIG. 6

Cos2πR/P
Sin2πR/P
DAC
DAC
ROM
ROM
ERROR SIGNAL
T

## FIG. 7

PIT LINE
PIT LINE
A—B
C—D
RECORDING TRACK